(19)

Europäisches
Patentamt

European
Patent Office

Office européen
des brevets

(11)  EP 4 245 876 A1

(12)  EUROPEAN PATENT APPLICATION
published in accordance with Art. 153(4) EPC

(43) Date of publication:
   20.09.2023  Bulletin 2023/38

(21) Application number: 21892214.4

(22) Date of filing: 02.11.2021

(51) International Patent Classification (IPC):
   $C22C\ 38/00^{(2006.01)}$     $C22C\ 38/02^{(2006.01)}$
   $C22C\ 38/04^{(2006.01)}$     $C22C\ 38/06^{(2006.01)}$
   $C22C\ 38/12^{(2006.01)}$     $C22C\ 38/14^{(2006.01)}$
   $C21D\ 8/02^{(2006.01)}$      $C21D\ 9/46^{(2006.01)}$
   $C23C\ 2/02^{(2006.01)}$      $C23C\ 2/06^{(2006.01)}$

(52) Cooperative Patent Classification (CPC):
   C23C 2/02; C21D 8/02; C21D 9/46; C22C 38/00;
   C22C 38/02; C22C 38/04; C22C 38/06;
   C22C 38/12; C22C 38/14; C23C 2/0224;
   C23C 2/024; C23C 2/06; C23C 2/40

(86) International application number:
   PCT/KR2021/015626

(87) International publication number:
   WO 2022/103044 (19.05.2022 Gazette 2022/20)

(84) Designated Contracting States:
   AL AT BE BG CH CY CZ DE DK EE ES FI FR GB
   GR HR HU IE IS IT LI LT LU LV MC MK MT NL NO
   PL PT RO RS SE SI SK SM TR
   Designated Extension States:
   BA ME
   Designated Validation States:
   KH MA MD TN

(30) Priority: 13.11.2020  KR 20200151821

(71) Applicant: POSCO Co., Ltd
   Pohang-si, Gyeongsangbuk-do 37859 (KR)

(72) Inventors:
   • KIM, Sung-Il
     Gwangyang-si, Jeollanam-do 57807 (KR)
   • NA, Hyun-Taek
     Seoul 06194 (KR)

(74) Representative: Meissner Bolte Partnerschaft
   mbB
   Patentanwälte Rechtsanwälte
   Postfach 86 06 24
   81633 München (DE)

(54)  **HIGH YIELD RATIO AND HIGH STRENGTH STEEL SHEET HAVING EXCELLENT THERMAL STABILITY, AND MANUFACTURING METHOD THEREFOR**

(57)  The present invention relates to a high strength steel sheet and a manufacturing method therefor, and, more specifically, to a steel sheet and a manufacturing method therefor, the steel sheet having excellent thermal stability to have high yield ratio and high strength even after heat treatment at a relatively low temperature.

【FIG. 1】

EP 4 245 876 A1

**Description**

[Technical Field]

The present disclosure relates to a high strength steel sheet and a manufacturing method therefor, and to a high yield ratio and high strength steel sheet having excellent thermal stability and a manufacturing method therefor.

[Background Art]

During the manufacturing process and use of steel sheets used for members, wheel rims, and connectors of automobile chassis parts, and structural members of building and mechanical parts, heat may be applied to some or all of the steel sheets and parts for various purposes. Meanwhile, there is a problem in that a strength of a steel material changes due to the heating process and durability is deteriorated.

As carbon in a solid solution state increases in the steel material during the heating process, clusters are formed at dislocations, grain boundaries, etc., to form carbides. At the same time, microstructures of martensite, bainite, retained austenite, etc., in steel also change, so that the strength of the steel changes rapidly and formability and durability are affected.

As such, the change in the structure and physical properties of the steel during the heating process varies depending on the initial components and microstructure of the steel, and is greatly dependent on heat treatment conditions such as heating temperature and holding time. Until now, the focus has been only on suppressing the decrease in strength at a high temperature of 600°C or higher.

For example, Patent Documents 1 and 2 disclose techniques for securing high-temperature strength by adding Cr, Mo, Nb, V, etc., as alloy components and using tempering after hot rolling, but the techniques are only suitable for manufacturing a thick plate steel material for construction. In addition, when considering the environmental factors, which inevitably heat up steel materials for construction, such as fire, by adding a large amount of alloy components such as Cr, Mo, Nb, and V in steel, it is possible to secure a certain level of strength even when the steel is exposed to a high temperature environment of 600°C or higher for a long period of time, but the techniques use expensive alloy components and requires a heat treatment process to secure mechanical properties, resulting in excessive manufacturing costs. In particular, there is a disadvantage in that the thermal stability is excessive for use when the steel is exposed to an environment of 600°C or lower for a short period of time.

Patent Document 3 discloses, as a technique for securing strength of a weld heat-affected zone by adding Ti, Nb, Cr, Mo, etc., a process of heating a region adjacent to a welding material melted by welding heat to a high temperature of 600°C or higher during arc welding. When heated to a high temperature, in particular, when heated to a temperature above the austenite range, Cr and Mo in steel increase hardenability of the steel and low-temperature phases such as bainite and martensite are formed during cooling, thereby securing the strength of the heat-affected zone. However, the above techniques have limitations in that formability is insufficient due to excessive addition of alloy elements and excessive cost is required.

[Related Art Document]

(Patent Document 1) Korean Patent Publication No. 10-0358939 (Published on October 16, 2002)
(Patent Document 2) Korean Patent Publication No. 10-1290382 (Published on July 22, 2013)
(Patent Document 3) Korean Patent Publication No. 10-0962745 (Published on June 03, 2010)

[Disclosure]

[Technical Problem]

The present disclosure provides a steel sheet having excellent thermal stability to have high yield ratio and high strength even after heat treatment at a relatively low temperature, and a manufacturing method therefor.

The subject of the present disclosure is not limited to the above. A person skilled in the art will have no difficulty understanding the further subject matter of the present disclosure from the general content of this specification.

[Technical Solution]

In an aspect of the present invention, a high strength steel sheet may include: by wt%, C: 0.02 to 0.08%, Si:

0.01 to 0.5%, Mn: 0.8 to 1.8%, Al: 0.01 to 0.1%, P: 0.001 to 0.02%, S: 0.001 to 0.01%, N: 0.001 to 0.01%, Ti: 0.0005 to 0.13%, Nb: 0.005 to 0.06%, Mo: 0.001 to 0.2%, the balance, and unavoidable impurities,

in which a |K| value is 0.8 or less defined in the following Relational Expression 1,
an RA value is 5 to 9.2 defined in the following Relational Expression 2,
a microstructure includes ferrite of 95 area% or more and the rest pearlite, and
a CN value is 1.5 or more defined in the following Relational Expression 3.

[Relational Expression 1]

$$|K| = -0.555 - 1.27[C] + 0.043[Si] - 0.113[Mn] + 0.08[Ti] + 0.086[Nb]^2$$

(where [C], [Si], [Mn], [Ti], and [Nb] are wt% of the corresponding alloy element.)

[Relational Expression 2]

$$RA = ([Ti]/48 + [Mo]/96 + [V]/51)/([Nb]/93)$$

(where [Ti], [Mo], [V], and [Nb] are wt% of the corresponding alloy element.)

[Relational Expression 3]

$$CN = N_{GB} \times 10^3 \times N_G^{-1}$$

(where $N_{GB}$ and $N_G$ each are the number of precipitates having a diameter of 50 nm or less formed within a grain boundary and a crystal grain of ferrite within a unit area (1 mm$^2$).)

The steel sheet may further include at least one of Cr, V, Ni, and B in a total content of 0.5% or less.

The steel sheet may have a tensile strength of 590 MPa or more, an elongation of 19% or more, and a yield ratio of 0.8 or more.

The steel sheet may have a yield ratio change ratio after heat treatment at 100 to 600°C that is 10% or less, compared to a yield ratio before heat treatment.

In another aspect of the present invention, a method of manufacturing a high strength steel sheet may include: reheating a steel slab in a temperature range of 1100 to 1350°C, the steel slab including, by wt%, C: 0.02 to 0.08%, Si: 0.01 to 0.5%, Mn: 0.8 to 1.8%, Al: 0.01 to 0.1%, P: 0.001 to 0.02%, S: 0.001 to 0.01%, N: 0.001 to 0.01%, Ti: 0.0005 to 0.13%, Nb: 0.005 to 0.06%, Mo: 0.001 to 0.2%, the balance, and unavoidable impurities, a |K| value of 0.8 or less defined in the following Relational Expression 1, and an RA value of 5 to 9.2 defined in the following Relational Expression 2;

hot rolling the reheated steel slab at a rolling end temperature of 850 to 1150°C;
cooling the hot-rolled steel sheet to a temperature range of 550 to 700°C at a cooling rate of 10 to 70°C/s and then coiling the steel sheet; and
cooling the coiled steel sheet to a temperature of 500°C or less at a cooling rate of 10 to 50°C/h.

[Relational Expression 1]

$$|K| = -0.555 - 1.27[C] + 0.043[Si] - 0.113[Mn] + 0.08[Ti] + 0.086[Nb]^2$$

(where [C], [Si], [Mn], [Ti], and [Nb] are wt% of the corresponding alloy element.)

[Relational Expression 2]

$$RA = ([Ti]/48+[Mo]/96+[V]/51)/([Nb]/93)$$

(where [Ti], [Mo], [V], and [Nb] are wt% of the corresponding alloy element.)

The steel sheet may further include at least one of Cr, V, Ni, and B in a total content of 0.5% or less.

The cooling may be initiated within 30 minutes after coiling.

The method may further include pickling and oiling the cooled steel sheet.

The method may further include heating the pickled and oiled steel sheet to a temperature range of 450 to 740°C and hot-dip galvanizing the pickled and oiled steel sheet.

The hot-dip galvanizing may use a plating bath including, by wt%, Mg: 0.01 to 30%, Al: 0.01 to 50%, the balance Zn, and unavoidable impurities.

[Advantageous Effects]

According to one aspect of the present disclosure, it is possible to provide the steel sheet having excellent thermal stability to have high yield ratio and high strength even after heat treatment at a relatively low temperature, and the manufacturing method therefor.

According to another aspect of the present disclosure, it is possible to provide the high strength steel sheet whose use may be expanded by performing heat treatment at a relatively low temperature for a short period of time and that may be easy to use when manufacturing a plated plate material using molten zinc, etc., and the manufacturing method therefor.

[BRIEF DESCRIPTION OF THE DRAWINGS]

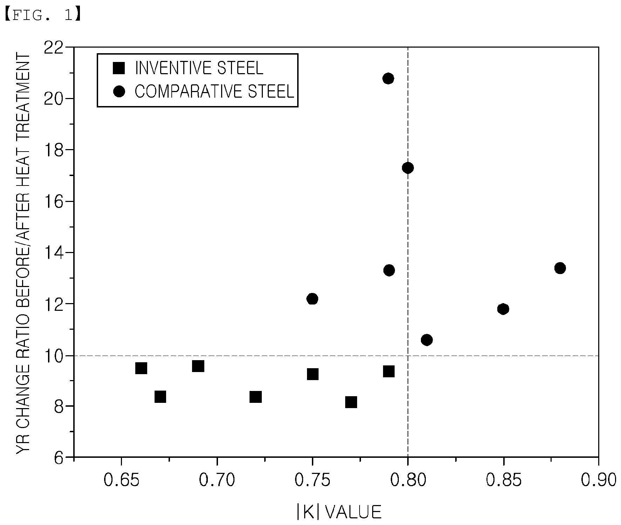

FIG. 1 is a graph showing a correlation between a IKI value and a YR change ratio before/after heat treatment in an embodiment of the present disclosure.

[Best Mode]

Hereinafter, exemplary embodiments in the present disclosure will be described. Exemplary embodiments in the present disclosure may be modified into several forms, and it is not to be interpreted that the scope of the present disclosure is limited to exemplary embodiments described in detail below. These exemplary embodiments are provided to explain the present disclosure in more detail to those skilled in the art to which the present disclosure pertains.

In order to solve the above-described problems of the related art, as a result of measuring the change in tensile strength at room temperature after heat treatment for a short period of time in the temperature range of 100 to 600°C for steels having various components and microstructures, the present inventors have confirmed that the change in tensile strength depends on the slope of the dynamic strength value measured during the temperature rise of the steel material.

From the results, the present inventors were able to derive Relational Expressions 1 and 2 that optimize the component content of C, Mn, Si, Ti, and Nb, which are main components of steel, and at the same time, have also confirmed that excellent thermal stability may be secured by controlling the conditions of the manufacturing process, and have completed the present disclosure.

Hereinafter, the present disclosure will be described in detail.

Hereinafter, a steel composition of the present disclosure will be described in detail.

In the present disclosure, unless otherwise specified, % indicating the content of each element is based on weight.

According to an aspect of the present disclosure, the steel may include: by wt%, C: 0.02 to 0.08%, Si: 0.01 to 0.5%, Mn: 0.8 to 1.8%, Al: 0.01 to 0.1%, P: 0.001 to 0.02%, S: 0.001 to 0.01%, N: 0.001 to 0.01%, Ti: 0.0005 to 0.13%, Nb: 0.005 to 0.06%, Mo: 0.001 to 0.2%, the balance, and inevitable impurities, and may include at least one of Cr, V, Ni, and B in a total content of 0.5% or less.

Carbon (C) : 0.02 to 0.08%

Carbon (C) is the most economical and effective element for strengthening steel. When the added amount increases, the tensile strength increases due to a precipitation strengthening effect or an increase in a bainite fraction. When the content of carbon (C) is less than 0.02%, it is difficult to sufficiently obtain the above effect, and when the content exceeds 0.08%, formability and weldability are deteriorated due to the formation of coarse carbides. In addition, during heat treatment in the range of 100 to 600°C, a solid solution strengthening effect of carbon (C) is reduced, and excessive carbides are formed in the structure, so the strength after heat treatment may be greatly reduced.

Accordingly, the content of carbon (C) may be 0.02 to 0.08%. The content of carbon (C) may be preferably 0.025% or more, more preferably 0.03% or more, and even more preferably 0.075% or less.

Silicon (Si): 0.001 to 0.5%

Silicon (Si) is an element advantageous for deoxidizing molten steel, having a solid solution strengthening effect, and delaying the formation of coarse carbides to improve formability. In addition, there is an effect of suppressing the formation of carbides during heat treatment in the range of 100 to 600°C. When the content of silicon (Si) is less than 0.001%, it is difficult to obtain the above effect, and the thermal stability may also be deteriorated. On the other hand, when the content exceeds 0.5%, red scales due to silicon (Si) are formed on the surface of the steel sheet during hot rolling, so there is a problem in that the surface quality of the steel sheet is not only very deteriorated, but the ductility and weldability are also deteriorated.

Accordingly, the content of silicon (Si) may be 0.001 to 0.5%. More preferably, the content of silicon (Si) may be 0.001 to 0.45%.

Manganese (Mn): 0.8 to 1.8%

Like Si, manganese (Mn) is an element effective in solid solution strengthening of steel. When the content of manganese (Mn) is less than 0.8%, the above effect may not be obtained by the addition, and when the content of manganese (Mn) exceeds 1.8%, a segregation part is greatly developed in a center of a thickness during casting the slab. When cooling after hot rolling, a microstructure in a thickness direction is non-uniformly formed, and as a result, ductility and formability may be deteriorated. In addition, during the heat treatment in the range of 100 to 600°C, there is a problem in that the thermal stability is also deteriorated due to the easy growth of carbides.

Therefore, the content of manganese (Mn) may be 0.8 to 1.8%. More preferably, the content of manganese (Mn) may be 0.9% or more, and more preferably, 1.7% or less.

Aluminum (Al) : 0.01 to 0.1%

Aluminum (Al) is mainly added for deoxidation. When the content of aluminum (Al) is less than 0.01%, the effect of the addition is insufficient, and when the content of aluminum (Al) exceeds 0.1%, AlN is formed by combining with N, so during continuous casting and casting, corner cracks are likely to occur in the slab, and defects may occur due to inclusion formation.

Therefore, the content of aluminum (Al) may be 0.01 to 0.1%. More preferably, the content of aluminum (Al) may be 0.02% or more, and more preferably, 0.08% or less.

Phosphorus (P): 0.001 to 0.02%

Like Si, phosphorus (P) has the effect of strengthening solid solution and accelerating ferrite transformation at the same time. When the content of phosphorus (P) exceeds 0.02%, brittleness occurs due to grain boundary segregation, and fine cracks are likely to occur during forming. On the other hand, in order to manufacture the content of phosphorus (P) less than 0.001%, the manufacturing cost is excessively required, which is economically disadvantageous, and may be insufficient to obtain strength.

Therefore, the content of phosphorus (P) may be 0.001 to 0.02%.

Sulfur (S) : 0.001 to 0.01%

Sulfur (S) is an impurity present in steel. When the content of sulfur (S) exceeds 0.01%, the sulfur (S) combines with Mn or the like to form non-metallic inclusions, which may cause fine cracks during cutting and processing of steel. On the other hand, in order to manufacture the content of sulfur (S) to less than 0.001%, the excessive time is required during steelmaking operation, which may reduce productivity.

Accordingly, the content of sulfur (S) may be 0.001 to 0.01%.

Nitrogen (N): 0.001 to 0.01%

Nitrogen (N) is a representative solid-solution strengthening element along with C, and forms coarse precipitates with Ti and Al. In general, the solid solution strengthening effect of nitrogen (N) is superior to that of C, but there is a problem in that toughness is greatly reduced as the amount of nitrogen (N) in steel increases, so the upper limit is limited to 0.01%. On the other hand, in order to manufacture the content of nitrogen (N) to less than 0.001%, the excessive time is required during steelmaking operation, which may reduce productivity.

Accordingly, the content of nitrogen (N) may be 0.001 to 0.01%.

Titanium (Ti): 0.005 to 0.13%

Titanium (Ti) is a representative precipitation strengthening element along with Nb and V, and forms coarse TiN with a strong affinity with N. TiN has the effect of suppressing crystal grain growth during the heating process for hot rolling. In addition, titanium (Ti) remaining after reacting with N is dissolved in steel and combined with C to form TiC precipitates, thereby improving the strength of the steel. When the content of titanium (Ti) is less than 0.005%, it is difficult to obtain the above effect, and when the content of titanium (Ti) exceeds 0.13%, formability may be deteriorated due to coarsening of TiN and TiC precipitates.

Therefore, the content of titanium (Ti) may be 0.005 to 0.13%. More preferably, the content of titanium (Ti) may be 0.01% or more, and more preferably, 0.12% or less.

Niobium (Nb): 0.005 to 0.06%

Niobium (Nb) is a representative precipitation strengthening element along with Ti and V. Niobium (Nb) is precipitated during hot rolling and is effective in improving the strength and impact toughness of steel due to the effect of refining crystal grains by delaying recrystallization. When the content of niobium (Nb) is less than 0.005%, the above effect may not be obtained, and when the content of niobium (Nb) exceeds 0.06%, formability may be deteriorated due to the formation of elongated crystal grains and the formation of coarse complex precipitates due to excessive recrystallization delay during hot rolling.

Therefore, the content of niobium (Nb) may be 0.005 to 0.06%. More preferably, the content of niobium (Nb) may be 0.01% or more, and more preferably, 0.05% or less.

Molybdenum (Mo): 0.001 to 0.2%

Since molybdenum (Mo) is an element that is effective in improving strength and thermal stability of steel since it has the effect of increasing the hardenability of steel to facilitate the formation of bainite and refining precipitates in ferrite grains. It is advantageous that molybdenum is added in the amount of 0.001% or more in order to obtain the above-described effect. However, the content of molybdenum exceeds 0.2%, martensite is formed due to an increase in hardenability and thermal stability rapidly decreases, which may be disadvantageous in terms of economy and weldability.

Therefore, the content of molybdenum (Mo) may be 0.001 to 0.2%. More preferably, the content of molybdenum (Mo) may be 0.002% or more, and more preferably, 0.19% or less.

The steel of the present disclosure may include remaining iron (Fe) and unavoidable impurities in addition to the above-described composition. Since the unavoidable impurities may be unintentionally incorporated in the normal manufacturing process, the unavoidable impurities may not be excluded. Since these impurities are known to those skilled in the steel manufacturing field, not all of these impurities are specifically mentioned in this specification.

Steel according to one aspect of the present disclosure may include one or more of chromium (Cr), vanadium (V), nickel (Ni), and boron (B) in a total content of 0.5% or less.

By adding at least one of chromium (Cr), vanadium (V), nickel (Ni), and boron (B), solid solution strengthening and precipitation hardening may be further promoted. However, when the total content of the components exceeds 0.5%, the ductility and formability of the steel may be insufficient, which may be disadvantageous in terms of cost.

In the steel of the present disclosure, a |K| value defined in the following Relational Expression 1 may be 0.8 or less.

The thermal stability of the steel related to the |K| value of the Relational Expression 1 is based on the resistance of the steel material to deformation against an external force applied to the steel material at a given temperature. For example, in the steel material, the high-temperature compression test or the high-temperature tensile test are performed, and during the test, the material is heated at a constant heating rate and at the same time an external force is applied at a constant deformation rate to measure the force applied per unit area to the material. The stress-temperature curve obtained from this result means the sensitivity to temperature of steel, and in particular, it may be determined that the |K| value that is a slope of the stress-temperature curve is the unique mechanical properties of the steel.

As a result of testing and measuring the |K| value corresponding to the slope of the stress-temperature curve obtained at this time for various steel materials, the present inventors may derive Relational Expression 1.

[Relational Expression 1]

$$|K| = -0.555 - 1.27[C] + 0.043[Si] - 0.113[Mn] + 0.08[Ti] + 0.086[Nb]^2$$

(where [C], [Si], [Mn], [Ti], and [Nb] are wt% of the corresponding alloy element.)

The |K| value of Relational Expression 1 of the present disclosure is the unique physical property of the steel as the slope of the dynamic strength value measured during the rising of the heat treatment of the steel material, and in the present disclosure, when the |K| value exceeds 0.8, the thermal stability may be insufficient, and the change in the yield ratio before and after heat treatment at 100 to 600°C may increase. However, when the value is less than 0.6, it may be difficult to obtain high-strength properties, so the value may be more preferably 0.6 or more.

The steel of the present disclosure may have an RA value of 5 to 9.2 defined in the following Relational Expression 2.

The change in yield strength before and after the heat treatment may exhibit a more stable tendency when the above Relational Expression 1 and the following Relational Expression 2 are simultaneously satisfied. When the RA value of the following Relational Expression 2 is less than 5, precipitates having a diameter of 50 nm or more increase in the microstructure of the steel sheet, resulting in insufficient thermal stability. When the value exceeds 9.2, the effect of improving the thermal stability decreases, and there is an economical disadvantage due to the addition of a large amount of expensive alloy elements. The upper limit may be more preferably 9.0.

[Relational Expression 2]

$$RA = ([Ti]/48 + [Mo]/96 + [V]/51)/([Nb]/93)$$

(where [Ti], [Mo], [V], and [Nb] are wt% of the corresponding alloy element.)

Hereinafter, the steel microstructure of the present disclosure will be described in detail.

In the present disclosure, unless otherwise specified, % indicating the fraction of the microstructure is based on area.

The microstructure of the steel according to one aspect of the present disclosure may include 95 area% or more of ferrite and the remaining pearlite, and the CN value defined in the following Relational Expression 3 may be 1.5 or more.

When the area fraction of the ferrite is less than 95%, there is a problem in that the formability is deteriorated due to the formation of the excessive pearlite and other structures, and when heat treated at 600° or lower, the thermal stability is deteriorated, such as a significant increase in the fraction of the deteriorated pearlite in the structure. More preferably, the ferrite fraction may be 97% or more.

The following relational expression 3 means the distribution characteristics of fine precipitates within the ferrite grain boundaries and crystal grains, and the present disclosure is characterized by mainly utilizing coherent precipitates formed within the ferrite crystal grains to secure the strength and thermal stability.

The reason why precipitates with an average diameter of 50 nm or less are used as a standard is that relatively coarse precipitates exceeding 50 nm may deteriorate the impact resistance and formability of the steel sheet. Therefore, the present disclosure is to suppress the formation of coarse precipitates exceeding 50 nm and to form fine precipitates of 50 nm or less.

When the CN value of the following Relational Expression 3 is less than 1.5, it means that fine coherent precipitates are not sufficiently formed at the grain boundary compared to the crystal grains, so the formation and growth of coarse carbides are facilitated at the grain boundary, where the solid solubility of carbon is relatively high compared to that in crystal grains. As a result, a grain boundary brittleness phenomenon may occur, resulting in poor impact resistance, foldability, and thermal stability. The CN value may be more preferably 3 or more, more preferably 5 or more, and even more preferably 10 or more.

[Relational Expression 3]

$$CN = N_{GB} \times 10^3 \times N_G^{-1}$$

(where $N_{GB}$ and $N_G$ each are the number of precipitates having a diameter of 50 nm or less formed within a grain boundary and a crystal grain of ferrite within a unit area (1 mm$^2$).)

Hereinafter, a method of manufacturing steel of the present disclosure will be described in detail.

The steel according to one aspect of the present disclosure may be manufactured by reheating, hot rolling, cooling, coiling and cooling a steel slab satisfying the above-described alloy composition.

Reheating Slab

The steel slab satisfying the above-described alloy composition may be reheated in a temperature range of 1100 to 1350 ° C.

When the reheating temperature is less than 1100°C, precipitates including Ti, Nb, Mo, and V are not sufficiently re-dissolved, so the formation of fine precipitates is reduced in the process after the hot rolling, and the coarse TiN may remain. On the other hand, when the temperature exceeds 1350°C, the strength may be reduced due to the growth of austenite crystal grains.

Hot Rolling

The reheated steel slab may be hot rolled at a rolling end temperature of 850 to 1150°C.When the rolling end temperature exceeds 1150°, the temperature of the steel sheet becomes excessively high, so the size of the crystal grains may be coarse and the surface quality of the steel sheet may be deteriorated. On the other hand, when the temperature is less than 850°C, there is a possibility that the elongated crystal grains are developed due to the excessive recrystallization delay, and thus, the anisotropy becomes severe and the foldability may also be deteriorated.

Cooling and Coiling

The hot-rolled steel sheet may be cooled to a temperature range of 550 to 700°C at a cooling rate of 10 to 70°C/s and then coiled.

When the cooling end and coiling temperature are less than 550°C, the bainite in the steel is unnecessarily formed, the precipitation strengthening effect of the steel is greatly reduced, and the Martensite & Austenite (MA) phase is formed, resulting in poor formability. On the other hand, when the temperature exceeds 700°C, the ferrite crystal grains become coarse and the coarse precipitates and pearlite are easily formed, so there is a possibility that the strength may be difficult to secure and the formability may also be deteriorated. More preferably, the hot-rolled steel sheet may be coiled after cooling to a temperature range of 600 to 700°C.

When the cooling rate is less than 10°C/s, the crystal grains of the base structure may be coarse and the microstructure may be non-uniform, whereas when the cooling rate exceeds 70°C/s, the bainite and martensite may be formed easily, so the deviation in strength of the steel may be severe and the formability may be reduced.

Cooling

The coiled steel sheet may be cooled to a temperature of 500°C or lower at a cooling rate of 10 to 50°C/h, and the cooling may be initiated within 30 minutes after coiling.

When the steel sheet coiled at a high coiling temperature in the range of 550 to 700°C is maintained in a high temperature state for a long period of time, the precipitates may be coarse. Therefore, according to the present disclosure, to suppress the precipitates from being coarse, the cooling may be initiated within 30 minutes after coiling. When the cooling rate is less than 10°C/h, the holding time at the high temperature becomes longer and the above effect may not be obtained, whereas when the cooling rate exceeds 50°C/h, the bainite or martensite is formed locally, so the deviation in strength of the steel becomes severe, and the foldability may be deteriorated.

The present disclosure may further include pickling and oiling the cooled steel sheet, and further include heating the pickled and oiled steel sheet to a temperature range of 450 to 740°C and hot-dip galvanizing the pickled and oiled steel sheet.

The hot-dip galvanizing may use a zinc-based plating bath, and the plating bath alloy composition is not particularly limited, but, for example, the plating bath may include, by wt%, Mg: 0.01 to 30%, Al: 0.01 to 50%, the balance Zn, and unavoidable impurities.

The steel sheet of the present disclosure manufactured as described above has a tensile strength of 590 MPa or more, an elongation of 19% or more, a yield ratio of 0.8 or more, and a yield ratio change ratio of 10% or less after heat treatment at 100 to 600°C compared to the yield ratio before heat treatment, and have the high yield ratio, and the high strength properties while being excellent in thermal stability.

Hereinafter, the present disclosure will be described in more detail with reference to Examples. However, it should be noted that the following Examples are only for illustrating the present disclosure in more detail and are not intended to limit the scope of the present disclosure.

[Mode for Invention]

Table 1 below showed alloy components according to steel types and a |K| value of Relational Expression 1 and an RA value of Relational Expression 2. In the present disclosure, the |K| value of the Relational Expression 1 was measured by applying the high-temperature compression test. Specifically, a rod-shaped sample having a diameter of 10 mm and a length of 15 mm was heated up to 600°C at a heating rate of 1°C/s and at the same time a deformation amount of 30% was applied at a deformation rate of 0.005°C/s. The |K| value corresponding to the slope of the 400 to 600°C section of the stress-temperature curve obtained at this time was measured.

[Table 1]

| Steel Type | Alloy Component (wt%) | | | | | | | | | | Relational Expression 1 (IKI) | Relational Expression 2 |
|---|---|---|---|---|---|---|---|---|---|---|---|---|
| | C | Si | Mn | Al | P | S | N | Ti | Nb | Mo | | |
| A | 0.11 | 0.02 | 1.7 | 0.029 | 0.009 | 0.002 | 0.004 | 0.05 | 0.032 | 0.009 | 0.88 | 3.30 |
| B | 0.04 | 0.10 | 1.9 | 0.028 | 0.010 | 0.001 | 0.003 | 0.03 | 0.040 | 0.007 | 0.81 | 1.62 |
| C | 0.08 | 0.01 | 1.8 | 0.028 | 0.009 | 0.002 | 0.003 | 0.11 | 0.035 | 0.015 | 0.85 | 6.50 |
| D | 0.04 | 0.41 | 1.5 | 0.028 | 0.009 | 0.002 | 0.003 | 0.12 | 0.059 | 0.025 | 0.75 | 4.35 |
| E | 0.07 | 0.41 | 1.6 | 0.028 | 0.009 | 0.002 | 0.003 | 0.05 | 0.025 | 0.175 | 0.80 | 10.66 |
| F | 0.06 | 0.41 | 1.6 | 0.028 | 0.009 | 0.002 | 0.003 | 0.11 | 0.025 | 0.011 | 0.79 | 8.95 |
| G | 0.06 | 0.41 | 1.6 | 0.028 | 0.009 | 0.002 | 0.003 | 0.11 | 0.025 | 0.007 | 0.79 | 8.80 |
| H | 0.03 | 0.02 | 0.9 | 0.030 | 0.011 | 0.001 | 0.004 | 0.11 | 0.025 | 0.007 | 0.69 | 8.80 |
| I | 0.07 | 0.10 | 0.8 | 0.028 | 0.009 | 0.001 | 0.004 | 0.09 | 0.030 | 0.007 | 0.72 | 6.04 |
| J | 0.03 | 0.30 | 0.8 | 0.025 | 0.010 | 0.002 | 0.004 | 0.09 | 0.035 | 0.007 | 0.66 | 5.18 |
| K | 0.04 | 0.40 | 0.8 | 0.024 | 0.01 | 0.002 | 0.003 | 0.09 | 0.030 | 0.009 | 0.67 | 6.10 |
| L | 0.05 | 0.06 | 1.4 | 0.025 | 0.009 | 0.001 | 0.004 | 0.11 | 0.035 | 0.009 | 0.77 | 6.34 |
| M | 0.06 | 0.01 | 1.5 | 0.028 | 0.009 | 0.002 | 0.003 | 0.11 | 0.035 | 0.015 | 0.79 | 6.50 |
| N | 0.04 | 0.41 | 1.5 | 0.028 | 0.009 | 0.002 | 0.003 | 0.10 | 0.024 | 0.025 | 0.75 | 9.08 |

[Relational Expression 1]

$$|K| = -0.555 - 1.27[C] + 0.043[Si] - 0.113[Mn] + 0.08[Ti] + 0.086[Nb]^2$$

(where [C], [Si], [Mn], [Ti], and [Nb] are wt% of the corresponding alloy element.)

[Relational Expression 2]

$$RA = ([Ti]/48 + [Mo]/96 + [V]/51)/([Nb]/93)$$

(where [Ti], [Mo], [V], and [Nb] are wt% of the corresponding alloy element.)

The steel sheet was manufactured by applying the rolling end temperature and coiling temperature shown in Table 2 below to the steel type of Table 1. The reheating not shown in Table 2 was performed in the temperature range of 1100 to 1350°, the cooling rate immediately after the hot rolling was 10 to 70°C/s, the cooling rate of the steel sheet after the coiling was performed in the same manner at 10 to 50°C/h, and the cooling was initiated within 30 minutes after the coiling.

In addition, Table 2 below showed the phase fraction of the microstructure of the steel sheet before heat treatment, after the cooling, and the CN value of Relational Expression 3. The fractions of the ferrite (F), bainite (B), martensite (M), and pearlite (P) were measured at a 1/4 point of the thickness of each steel type, and were measured from the results of analysis at x3000 and x5000 magnifications using SEM. Here, bainite includes low-temperature type ferrite, and pearlite includes carbides having a diameter of 0.1 um or more. The values of distribution of precipitates having a diameter of 50 nm or less formed in the crystal grains and grain boundaries of ferrite in Relational Expression 3 were calculated using TEM analysis for a unit area (1 mm$^2$).

[Table 2]

| Steel Type | Rolling End Temperature (°C) | Coiling Temperature (°C) | Microstructure (area%) | | | | Relational Expression 3 | Division |
|---|---|---|---|---|---|---|---|---|
| | | | F | B | M | P | | |
| A | 900 | 600 | 92 | 0 | 0 | 8 | 1.1 | Comparative Steel 1 |
| B | 890 | 600 | 94 | 0 | 0 | 6 | 0.9 | Ccomparative Steel 2 |
| C | 900 | 600 | 93 | 0 | 0 | 7 | 0.9 | Comparative Steel 3 |
| 0 | 900 | 600 | 99 | 0 | 0 | 1 | 1.4 | Comparative Steel 4 |
| E | 900 | 550 | 93 | 3 | 0 | 4 | 1.4 | Comparative Steel 5 |
| F | 900 | 750 | 94 | 0 | 0 | 6 | 49 | Comparative Steel 6 |
| G | 900 | 350 | 71 | 21 | 8 | 0 | 45 | Comparative Steel 7 |
| H | 910 | 640 | 98 | 0 | 0 | 2 | 24 | Inventive Steel 1 |
| I | 900 | 600 | 97 | 0 | 0 | 3 | 22 | Inventive Steel 2 |
| J | 890 | 650 | 98 | 0 | 0 | 2 | 13 | Inventive Steel 3 |

(continued)

| Steel Type | Rolling End Temperature (°C) | Coiling Temperature (°C) | Microstructure (area%) | | | | Relational Expression 3 | Division |
|---|---|---|---|---|---|---|---|---|
| | | | F | B | M | P | | |
| K | 920 | 650 | 98 | 0 | 0 | 2 | 19 | Inventive Steel 4 |
| L | 890 | 600 | 99 | 0 | 0 | 2 | 26 | Inventive Steel 5 |
| M | 900 | 600 | 98 | 0 | 0 | 2 | 31 | Inventive Steel 6 |
| N | 900 | 600 | 99 | 0 | 0 | 1 | 30 | Inventive Steel 7 |
| F: ferrite, B: bainite, M martensite, P: pearlite | | | | | | | | |

[Relational Expression 3]

$$CN = N_{GB} \times 10^3 \times N_G^{-1}$$

(where $N_{GB}$ and $N_G$ each are the number of precipitates with a diameter of 50 nm or less formed within a grain boundary and a crystal grain of ferrite within a unit area (1 mm$^2$).)

Table 3 below showed mechanical property values before heat treatment and mechanical property values after heat treatment. Tensile strength (TS), elongation at break (El), and yield ratio (yield strength/tensile strength) were shown, respectively, and the yield ratio change ratio before/after the heat treatment was calculated and shown. In this case, the tensile test was performed by taking a JIS5 standard test piece in a direction perpendicular to the rolling direction. The physical properties in Table 3 are the results of evaluation at room temperature both before/after the heat treatment, and the heat treatment of holding at 500°C for 60 minutes and then air-cooling to room temperature was applied.

[Table 3]

| Steel Typo | Physical Property before Treatment | | | Physical Property after Heat Treatment | | | YR Change Ratio before/after Heat Treatment (%) | Division |
|---|---|---|---|---|---|---|---|---|
| | $TS_0$ | $El_0$ | $YR_0$ | $TS_0$ | $El_h$ | $YR_b$ | | |
| A | 592 | 28 | 0.82 | 412 | 31 | 0.93 | 13.4 | Comparative Steel 1 |
| B | 613 | 26 | 0.85 | 431 | 28 | 0.94 | 10.6 | Comparative Steel 2 - |
| c | 945 | 16 | 0.85 | 817 | 17 | 0.95 | 11.8 | Comparative Steel 3 |
| D | 736 | 21 | 0.82 | 604 | 22 | 0.92 | 12.2 | Comparative Steel 4 |
| E | 852 | 18 | 0.81 | 588 | 20 | 0.95 | 17.3 | Comparative Steel 5 |
| F | 782 | 20 | 0.83 | 548 | 22 | 0.94 | 13.3 | Comparative Steel 6 |
| G | 835 | 19 | 0.77 | 569 | 20 | 0.93 | 20.8 | Comparative Steel 7 |
| H | 608 | 26 | 0.83 | 521 | 27 | 0.91 | 9.6 | Inventive Steel 1 |

(continued)

| Steel Typo | Physical Property before Treatment | | | Physical Property after Heat Treatment | | | YR Change Ratio before/after Heat Treatment (%) | Division |
|---|---|---|---|---|---|---|---|---|
| | $TS_0$ | $El_0$ | $YR_0$ | $TS_0$ | $El_h$ | $YR_b$ | | |
| I | 625 | 26 | 0.83 | 551 | 28 | 0.90 | 8.4 | Inventive Steel 2 |
| J | 595 | 27 | 0.84 | 510 | 28 | 0.92 | 9.5 | Inventive Steel 3 |
| K | 656 | 24 | 0.83 | 560 | 25 | 0.90 | 8.4 | Inventive Steel 4 |
| L | 687 | 23 | 0.85 | 615 | 24 | 0.92 | 8.2 | Inventive Steel 5 |
| M | 845 | 19 | 0.85 | 731 | 20 | 0.93 | 9.1 | Inventive Steel 6 |
| N | 775 | 21 | 0.86 | 711 | 23 | 0.94 | 9.3 | Inventive Steel 7 |

$TS_0$: Tensile strength before heat treatment (MPa), $El_0$: Elongation before heat treatment (%), $YR_0$: Yield ratio before heat treatment

$TS_h$: Tensile strength after heat treatment (MPa), $El_h$: Elongation after heat treatment (%), $YR_h$: Yield ratio after heat treatment

As shown in Tables 2 and 3, Inventive Steels 1 to 7 satisfying the alloy composition and manufacturing method proposed in the present disclosure secured all of the mechanical properties targeted in the present disclosure.

Meanwhile, Comparative Steels 1 to 3 do not satisfy Relational Expression 1 of the present disclosure, Comparative Steels 1 and 2 were out of the component range of the present disclosure due to excessive C or Mn content, coarse carbides were formed, and pearlite increased. After the heat treatment, carbides became coarser and crystal grain growth occurred, so the tensile strength greatly dropped, the yield point phenomenon occurred, and the yield strength slightly increased. The YR change ratio before and after heat treatment exceeded 10%, so the thermal stability was deteriorated. Comparative Steel 3 satisfied the alloy composition range of the present disclosure, but did not satisfy the Relational Expression 1, and had excessive carbide and pearlite structures, did not satisfy the range of ferrite fraction of the present disclosure, reduced fine precipitates at grain boundaries and within grains not to satisfy the Relational Expression 3, and had the poor thermal stability.

Comparative Steels 4 and 5 did not satisfy the range of Relational Expression 2 of the present disclosure. Comparative Steel 4 did not meet the range of Relational Expression 2 to increase the fraction of precipitates but form a large amount of precipitates of 50 nm or more at the grain boundary, and did not satisfy Relational Expression 3. As a result, the crystal grains grew non-uniformly during heat treatment, resulting in poor thermal stability. When Comparative Steel 5 was out of the range of Relational Expression 2, and had insufficient fine precipitates at the grain boundary compared to the inside of the grain, and did not satisfy Relational Expression 3. In addition, the hardenability increased and the ferrite fraction was insufficient due to the formation of bainite. The YR change ratio before and after heat treatment of this steel exceeded 10%. This is because the crystal grain growth occurred due to the insufficient stability of the grain boundary during the heat treatment, and the deterioration in the formed bainite occurred.

Comparative Steels 6 and 7 satisfied the alloy composition proposed in the present disclosure, but the coiling temperature was out of the range of the present disclosure. Comparative Steel 6 had the too high cooling end temperature, and thus, was out of the proposed range of the present disclosure, so pearlite was formed in the initial microstructure and the precipitates became also coarse. In the microstructure, it can be seen that precipitates became more easily coarse after the heat treatment, and the tensile strength is reduced due to the heat treatment. Comparative Steel 7 had the too low cooling end temperature, and thus, was out of the proposed range of the present disclosure, so bainite and martensite were formed. As a result, the yield ratio before heat treatment did not satisfy the range of the present disclosure, and the YR change ratio before/after heat treatment also exceeded the range of the present disclosure.

Although the present disclosure has been described in detail through embodiments above, other types of embodiments are also possible. Therefore, the spirit and scope of the claims set forth below are not limited to the embodiments.

**Claims**

1. A high strength steel sheet, comprising:

   by wt%, C: 0.02 to 0.08%, Si: 0.01 to 0.5%, Mn: 0.8 to 1.8%, Al: 0.01 to 0.1%, P: 0.001 to 0.02%, S: 0.001 to 0.01%, N: 0.001 to 0.01%, Ti: 0.0005 to 0.13%, Nb: 0.005 to 0.06%, Mo: 0.001 to 0.2%, the balance, and unavoidable impurities,
   wherein a |K| value is 0.8 or less defined in the following Relational Expression 1,
   an RA value is 5 to 9.2 defined in the following Relational Expression 2,
   a microstructure includes ferrite of 95 area% or more and the remaining pearlite, and
   a CN value is 1.5 or more defined in the following Relational Expression 3.

   [Relational Expression 1]

   $$|K| = -0.555-1.27[C]+0.043[Si]-0.113[Mn]+0.08[Ti]+0.086[Nb]^2$$

   (where [C], [Si], [Mn], [Ti], and [Nb] are wt% of the corresponding alloy element.)

   [Relational Expression 2]

   $$RA = ([Ti]/48+[Mo]/96+[V]/51)/([Nb]/93)$$

   (where [Ti], [MoJ, [V], and [Nb] are wt% of the corresponding alloy element.)

   [Relational Expression 3]

   $$CN = N_{GB} \times 10^3 \times N_G^{-1}$$

   (where $N_{GB}$ and $N_G$ each are the number of precipitates having a diameter of 50 nm or less formed within a grain boundary and a crystal grain of ferrite within a unit area (1 mm$^2$).)

2. The high strength steel sheet of claim 1, further comprising:
   at least one of Cr, V, Ni, and B in a total content of 0.5% or less.

3. The high strength steel sheet of claim 1, wherein a tensile strength is 590 MPa or more, an elongation is 19% or more, and a yield ratio is 0.8 or more.

4. The high strength steel sheet of claim 1, wherein a yield ratio change ratio after heat treatment at 100 to 600°C is 10% or less, compared to a yield ratio before heat treatment.

5. A method of manufacturing a high strength steel sheet, comprising:

   reheating a steel slab in a temperature range of 1100 to 1350°C, the steel slab including, by wt%, C: 0.02 to 0.08%, Si: 0.01 to 0.5%, Mn: 0.8 to 1.8%, Al: 0.01 to 0.1%, P: 0.001 to 0.02%, S: 0.001 to 0.01%, N: 0.001 to 0.01%, Ti: 0.0005 to 0.13%, Nb: 0.005 to 0.06%, Mo: 0.001 to 0.2%, the balance, and unavoidable impurities, a |K| value of 0.8 or less defined in the following Relational Expression 1, and an RA value of 5 to 9.2 defined in the following Relational Expression 2;
   hot rolling the reheated steel slab at a rolling end temperature of 850 to 1150°C;
   cooling the hot-rolled steel sheet to a temperature range of 550 to 700°C at a cooling rate of 10 to 70°C/s and then coiling the steel sheet; and
   cooling the coiled steel sheet to a temperature of 500°C or less at a cooling rate of 10 to 50°C/h.

[Relational Expression 1]

$$|K| = -0.555-1.27[C]+0.043[Si]-0.113[Mn]+0.08[Ti]+0.086[Nb]^2$$

(where [C], [Si], [Mn], [Ti], and [Nb] are wt% of the corresponding alloy element.)

[Relational Expression 2]

$$RA = ([Ti]/48+[Mo]/96+[V]/51)/([Nb]/93)$$

(where [Ti], [MoJ, [V], and [Nb] are wt% of the corresponding alloy element.)

6. The method of claim 5, wherein the steel sheet further includes at least one of Cr, V, Ni, and B in a total content of 0.5% or less.

7. The method of claim 5, wherein the cooling is initiated within 30 minutes after coiling.

8. The method of claim 5, further comprising:
   pickling and oiling the cooled steel sheet.

9. The method of claim 8, further comprising:
   heating the pickled and oiled steel sheet to a temperature range of 450 to 740°C and then hot-dip galvanizing the pickled and oiled steel sheet.

10. The method of claim 9, wherein the hot-dip galvanizing uses a plating bath including, by wt%, Mg: 0.01 to 30%, Al: 0.01 to 50%, the balance Zn, and unavoidable impurities.

【FIG. 1】

| INTERNATIONAL SEARCH REPORT | International application No. |
|---|---|
| | **PCT/KR2021/015626** |

**A. CLASSIFICATION OF SUBJECT MATTER**

**C22C 38/00**(2006.01)i; **C22C 38/02**(2006.01)i; **C22C 38/04**(2006.01)i; **C22C 38/06**(2006.01)i; **C22C 38/12**(2006.01)i; **C22C 38/14**(2006.01)i; **C21D 8/02**(2006.01)i; **C21D 9/46**(2006.01)i; **C23C 2/02**(2006.01)i; **C23C 2/06**(2006.01)i

According to International Patent Classification (IPC) or to both national classification and IPC

**B. FIELDS SEARCHED**

Minimum documentation searched (classification system followed by classification symbols)

C22C 38/00(2006.01); C21D 8/02(2006.01); C22C 38/06(2006.01); C22C 38/12(2006.01); C22C 38/14(2006.01); C22C 38/22(2006.01); C22C 38/58(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고강도(high strength), 고항복비(high yield ratio), 열간압연(hot rolling), 냉각 (cooling), 망간(Mn), 티타늄(Ti), 실리콘(Si), 니오븀(Nb), 탄소(carbon), 페라이트(ferrite)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0070894 A (POSCO) 27 June 2018 (2018-06-27)<br>See paragraphs [0116] and [0120]-[0121], claims 1 and 5 and table 3. | 1-10 |
| A | KR 10-2013-0116329 A (NIPPON STEEL & SUMITOMO METAL CORPORATION) 23 October 2013 (2013-10-23)<br>See paragraphs [0176]-[0188] and claims 1, 4 and 6. | 1-10 |
| A | JP 2011-012308 A (NIPPON STEEL CORP.) 20 January 2011 (2011-01-20)<br>See claims 1 and 4-9. | 1-10 |
| A | JP 2012-001775 A (NIPPON STEEL CORP.) 05 January 2012 (2012-01-05)<br>See claims 1-3 and 5. | 1-10 |
| A | JP 2003-321740 A (JFE STEEL K.K.) 14 November 2003 (2003-11-14)<br>See paragraphs [0020]-[0025]. | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2022** | **16 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/015626**

| Patent document cited in search report | | | Publication date (day/month/year) | Patent family member(s) | | | Publication date (day/month/year) |
|---|---|---|---|---|---|---|---|
| KR | 10-2018-0070894 | A | 27 June 2018 | CN | 110050083 | A | 23 July 2019 |
| | | | | CN | 110050083 | B | 05 February 2021 |
| | | | | EP | 3556890 | A1 | 23 October 2019 |
| | | | | JP | 2020-509187 | A | 26 March 2020 |
| | | | | JP | 6843246 | B2 | 17 March 2021 |
| | | | | KR | 10-1899674 | B1 | 17 September 2018 |
| | | | | US | 2020-0071786 | A1 | 05 March 2020 |
| | | | | WO | 2018-117470 | A1 | 28 June 2018 |
| KR | 10-2013-0116329 | A | 23 October 2013 | BR | 112013023633 | A2 | 13 December 2016 |
| | | | | CN | 103328671 | A | 25 September 2013 |
| | | | | CN | 103328671 | B | 03 June 2015 |
| | | | | JP | 5429429 | B2 | 26 February 2014 |
| | | | | JP | WO2012-128206 | A1 | 24 July 2014 |
| | | | | KR | 10-1531778 | B1 | 25 June 2015 |
| | | | | MX | 2013009509 | A | 26 September 2013 |
| | | | | MX | 364430 | B | 26 April 2019 |
| | | | | US | 10428409 | B2 | 01 October 2019 |
| | | | | US | 2014-0000766 | A1 | 02 January 2014 |
| | | | | WO | 2012-128206 | A1 | 27 September 2012 |
| JP | 2011-012308 | A | 20 January 2011 | JP | 5338525 | B2 | 13 November 2013 |
| JP | 2012-001775 | A | 05 January 2012 | JP | 5402847 | B2 | 29 January 2014 |
| JP | 2003-321740 | A | 14 November 2003 | JP | 4007051 | B2 | 14 November 2007 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100358939
- KR 101290382
- KR 100962745